# EUROPÄISCHE PATENTSCHRIFT

(11) **EP 1 660 339 B1**
(45) Veröffentlichungstag und Bekanntmachung des Hinweises auf die Patenterteilung: **12.09.2007**
(21) Anmeldenummer: 04763781.4
(22) Anmeldetag: 04.08.2004
(51) Int. Cl.: B60H 1/34

(54) **DÜSE, INSBESONDERE FÜR EIN KRAFTFAHRZEUG**
NOZZLE, ESPECIALLY FOR A MOTOR VEHICLE
BUSE, DESTINEE EN PARTICULIER A UN VEHICULE AUTOMOBILE

(30) Priorität: 25.08.2003 DE 10339339
(43) Veröffentlichungstag der Anmeldung: 31.05.2006
(73) Patentinhaber: Behr GmbH & Co. KG, 70469 Stuttgart (DE)
(72) Erfinder: KLINGLER, Dietrich, 73540 Heubach (DE); VOIGT, Klaus, 74321 Bietigheim-Bissingen (DE)
(74) Vertreter: Mantel, Berthold Friedrich
(86) Internationale Anmeldenummer: PCT/EP2004/008731
(87) Internationale Veröffentlichungsnummer: WO 2005/021301

(56) Entgegenhaltungen:
- EP-A- 0 754 580
- WO-A-99/07569
- DE-A- 10 061 060
- US-A- 5 328 152

## Beschreibung

Die Erfindung betrifft eine Düse, insbesondere für ein Kraftfahrzeug, gemäß dem Oberbegriff des Anspruchs 1, und ein Belüftungssystem.

Aus der EP 1 223 061 A2 ist ein Luftausströmer, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar sind, in der mindestens ein Teil der Lamellen in zueinander entgegengesetzter Richtung verschwenkbar ist. Der Luftausströmer ist vor einem Luftkanal angeordnet, aus dem ein Luftstrom austritt, dessen Richtung mit Hilfe des Luftausströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft.

Aus der WO 99/07569 ist ferner eine Belüftungsvorrichtung bekannt, wobei einem Haupt-Luftstrom mittels Klappen geregelt zwei oder mehr Teil-Luftströme abzweigbar sind, welche im Bereich der Ausströmöffnung dem Haupt-Luftstrom wieder zuführbar sind, so dass die Teil-Luftströme den Haupt-Luftstrom bei Bedarf seitlich ablenken. Hierfür sind die einzelnen Luftkanäle der Teil-Luftströme in der Ebene der normalen Strömungsrichtung des Haupt-Luftstroms liegend in einem Bogen zum Haupt-Luftstrom geführt, so dass bei geöffneter Klappe der entsprechende Teil-Luftstrom in einem Winkel zur Haupt-Luftstrom diesem zugeführt wird, und der Haupt-Luftstrom durch den Teil-Luftstrom seitlich abgelenkt wird.

Die DE 100 61 060 A1 zeigt eine Luftströmungsbeeinflussungseinrichtung, insbesondere zur Verwendung in der Instrumententafel von Fahrzeugen. Ein Luftausströmer weist dabei verstellbare Luftleitelemente, sowie einen mehrteiligen Luftanschluss-Stutzen mit wenigstens einer zusätzlichen, im Wesentlichen nach unten wirkenden Luftausströmeinrichtung auf.

Derartige Vorrichtungen lassen jedoch noch Wünsche offen, insbesondere in Hinblick auf die Einstellbarkeit.

Es ist Aufgabe der Erfindung, eine verbesserte Düse zur Verfügung zu stellen.

Diese Aufgabe wird gelöst durch eine Düse mit den Merkmalen des Anspruchs 1. Vorteilhafte Ausgestaltungen sind Gegenstand der Unteransprüche.

Erfindungsgemäß ist eine Düse, insbesondere für ein Belüftungssystem eines Kraftfahrzeugs, mit mindestens einem Luft zuführenden Strömungskanals vorgesehen, wobei die Ausström-Richtung der Düse in Hinblick auf mindestens einen Teil-Strömungskanal einstellbar ist und mindestens ein Teil-Strömungskanal starr, d.h. nicht in seiner Ausströmrichtung verstellbar, ausgebildet ist.

Der einstellbare Teil-Strömungskanal ist innerhalb eines anderen Teil-Strömungskanals angeordnet, wobei der innere Teil-Strömungskanal insbesondere einen im Wesentlichen kreisförmigen Querschnitt aufweist. Dabei ist die Luftströmung im inneren Teil-Strömungskanal gerichtet, während bevorzugt die Luftströmung im äußeren Teil-Strömungskanal mit einem Drall versehen ist, wofür die äußere Luftströmung insbesondere schraubenartig um den inneren Teil-Strömungskanal geführt ist. Auf Grund der Drallbeaufschlagung ergibt sich am Austritt eine diffuse Luftströmung, wie sie in der Komfortstellung erwünscht ist.

Bevorzugt weist die Düse mindestens einen, vorzugsweise zwei verschwenkbare oder einen verdrehbaren Abschnitt auf. Unter Verschwenken soll vorliegend eine Rotationsbewegung um genau eine Achse mit einem Freiheitsgrad, unter Verdrehen eine Überlagerung von wenigstens zwei Rotationsbewegungen mit unterschiedlichen Achsen und mehreren Freiheitsgraden verstanden werden. Durch zwei verschwenkbare Abschnitte, deren Schwenkachsen senkrecht zueinander angeordnet sind, lassen sich beliebige Ausströmrichtungen einstellen, ebenso wie durch einen einzigen, entsprechend verdrehbaren Abschnitt. Dabei bilden der oder die Abschnitte den oder zumindest einen Teil des einstellbaren Teil-Strömungskanals.

Vorzugsweise sind bei einer Ausgestaltung mit zwei verschwenkbaren Abschnitten die beiden Abschnitte um eine erste Schwenkachse verschwenkbar und nur einer, insbesondere der am Luftaustritt gelegene Abschnitt, um die zweite Schwenkachse verschwenkbar. Dies erleichtert die Abdichtung zwischen den beiden Abschnitten.

Die Düse kann auch mehrteilig ausgebildet sein, insbesondere zweiteilig, wobei die beiden Düsenteile einander entsprechend ausgebildet sind und jeweils einen einstellbaren Teil-Strömungskanal aufweisen. Bevorzugt sind hierbei die Teil-Strömungskanäle parallel zueinander verschwenkbar.

Bevorzugt werden eine oder mehrere derartige Düsen in einem Belüftungssystem, insbesondere für ein Kraftfahrzeug, verwendet, so dass neben einer Komfortstellung die Düse oder die einzelnen Düsen gerichtete Spot-Stellung zur Verfügung stellen. Insbesondere sind auch beliebige Zwischenstellungen zwischen Komfort- und Spot-Stellung und beliebige Ausrichtungen des gerichteten Luftstrahls möglich.

Im Folgenden wird die Erfindung anhand von fünf Ausführungsbeispielen unter Bezugnahme auf die Zeichnung im Einzelnen erläutert. In der Zeichnung zeigen:
- Fig. 1: eine Ansicht einer Düse gemäß dem ersten Ausführungsbeispiel,
- Fig. 2: eine teilweise aufgeschnittene Ansicht der Düse von Fig. 1,
- Fig. 3: eine Detailansicht des zentralen Bereichs der Düse von Fig. 1,
- Fig. 4a-c: teilweise aufgeschnittene Ansichten der Düse von Fig. 1 in verschiedenen Stellungen,
- Fig. 5: eine Ansicht einer Düse gemäß dem zweiten Ausführungsbeispiel,
- Fig. 6: eine teilweise aufgeschnittene Ansicht der Düse von Fig. 5,
- Fig. 7: eine Detailansicht des zentralen Bereichs der Düse von Fig. 5,
- Fig. 8a-c: teilweise aufgeschnittene Ansichten der Düse von Fig. 5 in verschiedenen Stellungen,
- Fig. 9: eine geschnittene Ansicht einer Düse gemäß dem dritten Ausführungsbeispiel,
- Fig. 10: eine geschnittene Ansicht einer Düse gemäß dem vierten Ausführungsbeispiel,
- Fig. 11a-b: Ansichten der Düse von Fig. 10, und
- Fig. 12: eine geschnittene Ansicht einer Düse gemäß dem fünften Ausführungsbeispiel.

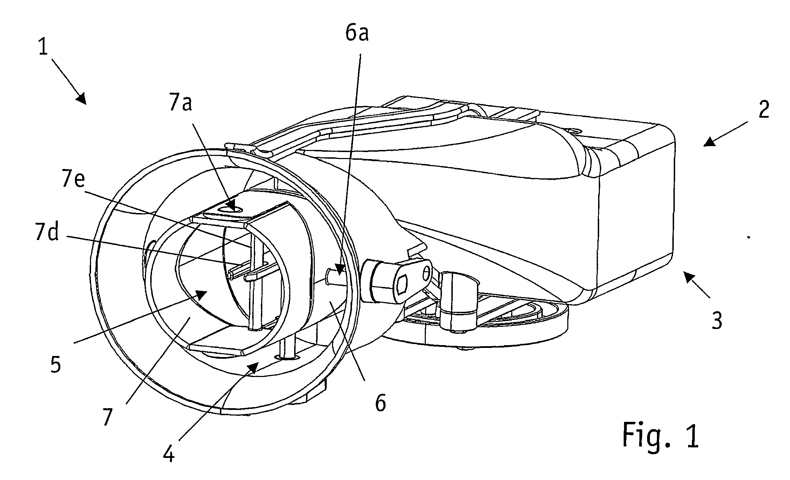

Die Figuren 1 bis 4c zeigen eine einstellbare Düse 1 gemäß dem ersten Ausführungsbeispiel, welche in einem Luftausströmer eines Belüftungssystems von einem Kraftfahrzeug verwendet wird. Hierbei ist am Ende der Düse 1 ein Gitter (nicht dargestellt) angeordnet, welches die Düse 1 unter anderem schützt.

Der Düse 1 wird über einen Strömungskanal 2 temperierte Luft von einer Klimaanlage (nicht dargestellt) zugeführt. Dieser Strömungskanal 2 wird im Einlassbereich 3 der Düse 1 in zwei Teil-Strömungskanäle, nämlich einem äußeren Teil-Strömungskanal 4 und einem inneren Teil-Strömungskanal 5 aufgeteilt. Dabei wird dem äußeren Teil-Strömungskanal 4 ein Drall durch entsprechende Umlenkung im Strömungsverlauf gegeben, so dass durch diesen äußeren Teil-Strömungskanal 4 dem Fahrzeuginnenraum Luft mit einem diffusen Strömungsverlauf zugeführt wird. Der innere Teil-Strömungskanal 5 ist dagegen möglichst gerade ausgebildet, so dass durch diesen Teil-Strömungskanal 5 dem Fahrzeuginnenraum Luft mit einer relativ gleichmäßigen, verwirbelungsfreien Strömung zugeführt wird.

Der äußere Teil-Strömungskanal 4 dient insbesondere der Zuführung von Luft bei einer Komfortstellung (diffuse Strömung) des Luftausströmers und ist starr ausgebildet, während der innere Teil-Strömungskanal 5 der Zuführung der Luft in einer Spot-Stellung (gerichtete Strömung) des Luftausströmers dient. Beliebige Mischstellungen sind möglich. Die Aufteilung des über den Strömungskanal 2 zugeführten Luftstromes auf die beiden Teil-Strömungskanäle 4 und 5 erfolgt mittels einer nicht näher dargestellten Dosiervorrichtung.

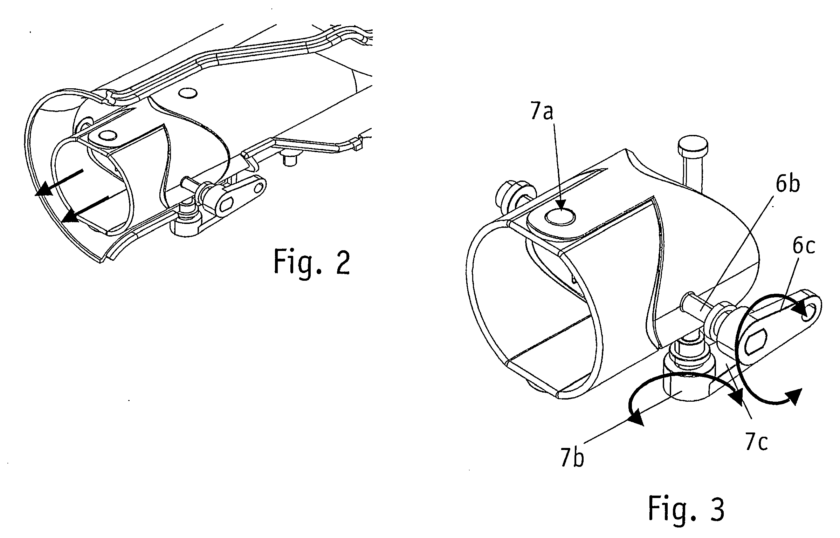

Für die Einstellbarkeit der gerichteten Luftströmung ist der innere Teil-Strömungskanal 5 gelenkig ausgebildet. Hierfür sind gemäß dem ersten Ausführungsbeispiel zwei benachbarte und im Wesentlichen hohlzylindrische Abschnitte 6 und 7 vorgesehen, welche um je eine quer zur Längsrichtung der Düse 1 angeordnete Achse 6a bzw. 7a verschwenkbar sind, wobei die Achsen 6a und 7a senkrecht zueinander ausgerichtet sind (siehe Fig. 3). Dabei wird der in Luftströmungsrichtung gesehen zuerst durchströmte Abschnitt 6 als erster Abschnitt 6, der danach durchströmte Abschnitt 7 als zweiter Abschnitt 7 bezeichnet. Die beiden Abschnitte 6 und 7 werden um die Achse 6a geschwenkt, um die Achse 7a wird jedoch nur der vordere Abschnitt 7 geschwenkt, so dass der innere Teil-Strömungskanal 5 im äußeren Teil-Strömungskanal 4 derart verschwenkt werden kann, dass die gerichtete Luftströmung in ihrer Ausströmrichtung einstellbar ist.

Zum Schwenken der beiden Abschnitte 6 und 7 um die Achse 6a ist eine entsprechend ausgebildete Antriebwelle 6b vorgesehen, welche an einem oder beiden Enden mit einem Hebel 6c fest verbunden ist, welcher eine Einstellbewegung in ein entsprechendes Verschwenken der beiden Abschnitte 6 und 7 umsetzt.

Für ein Verschwenken des zweiten Abschnitts 7 gegenüber dem ersten Abschnitt 6 ist eine Antriebswelle 7b vorgesehen, welche ebenfalls fest mit einem Hebel 7c verbunden ist, der eine Einstellbewegung in ein entsprechendes Verschwenken der Antriebswelle 7b umsetzt. An der Antriebswelle 7b ist ein gegabelter Arm 7d (siehe z.B. Fig. 1) fest angebracht, welcher in seiner Gabel in eine am zweiten Abschnitt 7 vorgesehene Querachse 7e schwenkbar und längsverschiebbar aufnimmt. Der zweite Abschnitt 7 ist in seiner Achse 7a am ersten Abschnitt 6 gelagert, wofür am zweiten Abschnitt 7 außen zwei in der Achse 7a angeordnete Zapfen vorgesehen sind, welche in entsprechende im ersten Abschnitt 6 vorgesehene, als Lager dienende Öffnungen gesteckt sind (siehe Fig. 3). Wird die Antriebswelle 7b in Fig. 3 beispielsweise im Uhrzeigersinn gedreht, so verdreht sich der gegabelte Arm 7c entsprechend und nimmt die Querachse 7e mit. Folglich erfolgt ein Verschwenken des zweiten Abschnitts 7 entgegen dem Uhrzeigersinn.

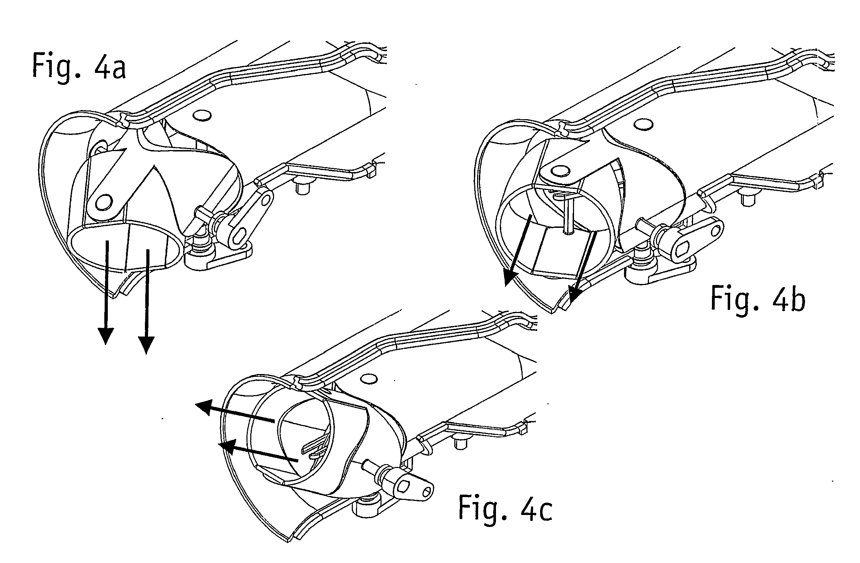

Fig. 4a zeigt eine Stellung, in der die Ausströmrichtung nach unten rechts zeigt, Fig. 4b zeigt eine Stellung, in der die Ausströmrichtung in die Mitte rechts zeigt und Fig. 4c zeigt eine Stellung, in der die Ausströmrichtung nach oben links zeigt, wie durch Pfeile verdeutlicht ist. Da hierbei nur Spot-Einstellungen der Düse 1 dargestellt sind, ist die durch den äußeren Teil-Strömungskanal 4 austretende Luftströmung vernachlässigbar. Im Falle von Zwischeneinstellungen zwischen Spot-Einstellung und Komfort-Einstellung tritt neben der gerichteten Luftströmung durch den Ringspalt zusätzlich eine diffuse Luftströmung aus.

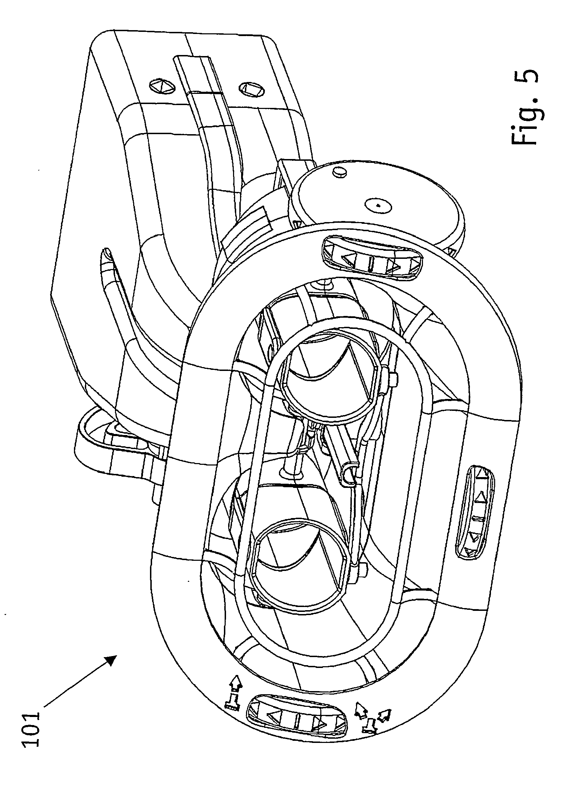

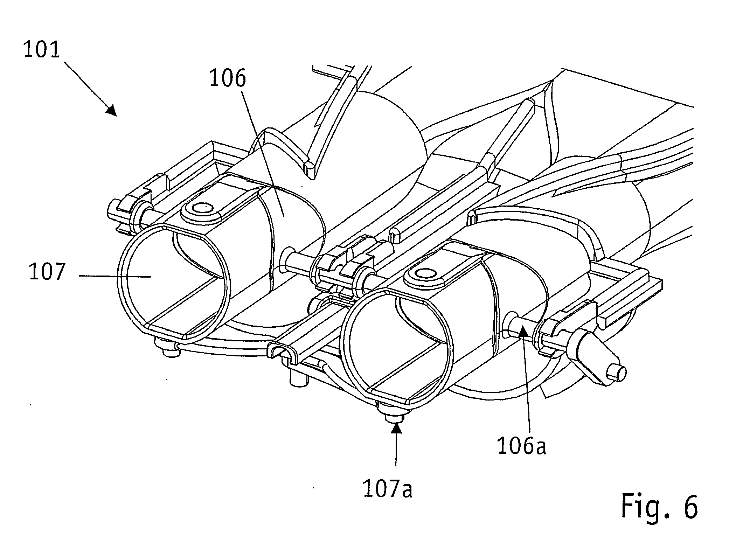

Die Figuren 5 bis 8d zeigen eine Düse 101 gemäß dem zweiten Ausführungsbeispiel, wobei in der folgenden Beschreibung um 100 höhere Bezugszeichen für gleiche oder einander entsprechende Elemente verwendet werden.

Die Düse 101 ist zweiteilig ausgebildet, wobei die Funktion im Wesentlichen die Gleiche ist, wie die der Düse 1 des ersten Ausführungsbeispiels, jedoch werden bei einer Betätigung, d.h. einer Veränderung der Richtungseinstellung des Spot-Strahls, die entsprechenden hohlzylindrischen Abschnitte 106 bzw. 107 um die jeweiligen Achsen 106a bzw. 107a verschwenkt, so dass stets zwei parallel ausgerichtete Luftströmungen austreten. Die Achsen 106a der beiden nebeneinander angeordneten Abschnitte 106 der Düse 101 liegen in Verlängerung voneinander, die beiden Achsen 107a der Abschnitte 107 sind parallel zueinander, jedoch beabstandet voneinander angeordnet.

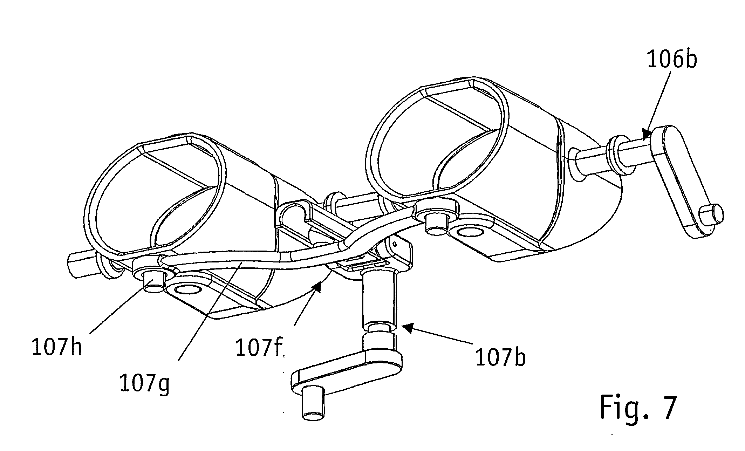

Das Verschwenken der beiden Abschnitte 106 und 107 um die Achse 106 erfolgt entsprechend dem ersten Ausführungsbeispiel mit Hilfe einer Antriebswelle 106b. Zum Verschwenken des zweiten Abschnitts 107 gegenüber dem ersten Abschnitt 106 ist eine zwischen den beiden Düsenteilen angeordnete Antriebswelle 107b vorgesehen, welche mit einer Kulisse einer Gleitführung 107f fest verbunden ist, wobei ein als Zapfen ausgebildeter Gleitstein der Gleitführung 107f an einer Koppelstange 107g angebracht ist. Die Koppelstange 107g ist ihrerseits mit Zapfen 107h, welche an den zweiten Abschnitten 107 vorgesehen sind, verbunden, welche im Prinzip die Funktion der Querachse 7e des ersten Ausführungsbeispiels haben. Der zweite Abschnitt 107 ist in seiner Achse 107a am ersten Abschnitt 106 gelagert, wofür am zweiten Abschnitt 107 außen zwei in der Achse 107a angeordnete Zapfen vorgesehen sind, welche in entsprechende im ersten Abschnitt 106 vorgesehene, als Lager dienende Öffnungen gesteckt sind (siehe Fig. 7). Wird die Antriebswelle 107b in Fig. 7 beispielsweise im Uhrzeigersinn gedreht, so wird die Koppelstange 107g nach links bewegt, woraufhin der zweite Abschnitt 107 ebenfalls im Uhrzeigersinn um die Achse 107a geschwenkt wird.

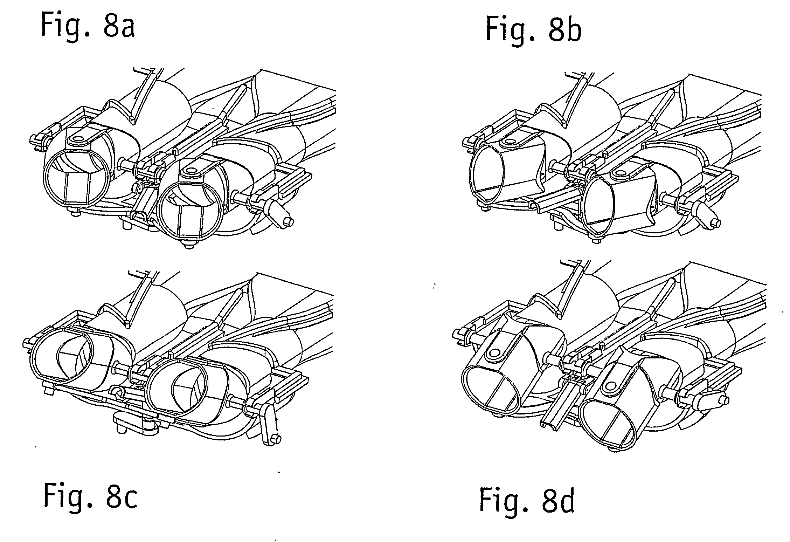

Fig. 8a zeigte eine Stellung der Düse 101 nach rechts, Fig. 8b nach links, Fig. 8c nach oben und Fig. 8d nach unten.

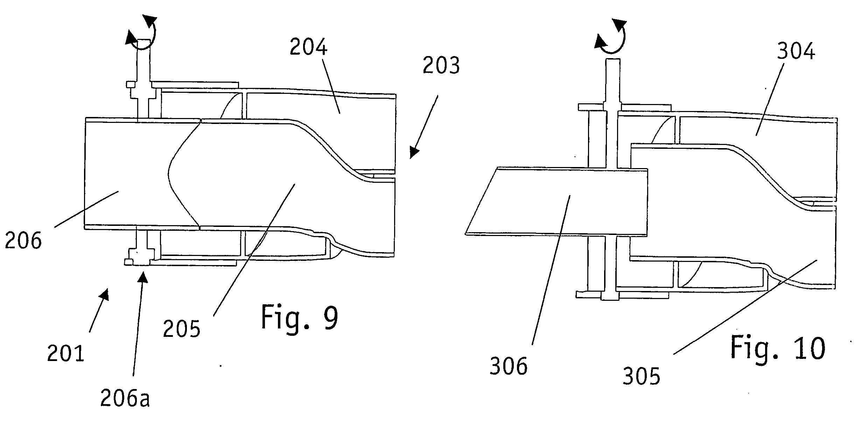

Fig. 9 zeigt einen Schnitt durch eine Düse 201 gemäß dem dritten Ausführungsbeispiel, welche lediglich einen verschwenkbaren Abschnitt 206 aufweist, welcher um eine Achse 206a verschwenkbar ist.

Der Düse 1 wird über einen Strömungskanal (nicht dargestellt) temperierte Luft von einer Klimaanlage zugeführt. Dieser Strömungskanal ist im Einlassbereich 203 der Düse 201 in zwei Teil-Strömungskanäle, nämlich einem äußeren Teil-Strömungskanal 204 und einem inneren Teil-Strömungskanal 205 aufgeteilt. Dabei wird dem äußeren Teil-Strömungskanal 204 ein Drall durch entsprechende Umlenkung im Strömungsverlauf gegeben, so dass durch diesen äußeren Teil-Strömungskanal 204 dem Fahrzeuginnenraum Luft mit einem diffusen Strömungsverlauf zugeführt wird. Der innere Teil-Strömungskanal 205 ist dagegen möglichst gerade ausgebildet, so dass durch diesen Teil-Strömungskanal 205 dem Fahrzeuginnenraum Luft mit einer relativ gleichmäßigen, verwirbelungsfreien Strömung zugeführt wird. Die Funktion der Düse 201 entspricht im Wesentlichen der des ersten Ausführungsbeispiels, wobei jedoch die zweite Umlenkmöglichkeit entfällt, so dass der Spot-Strahl lediglich in einer Ebene einstellbar ist.

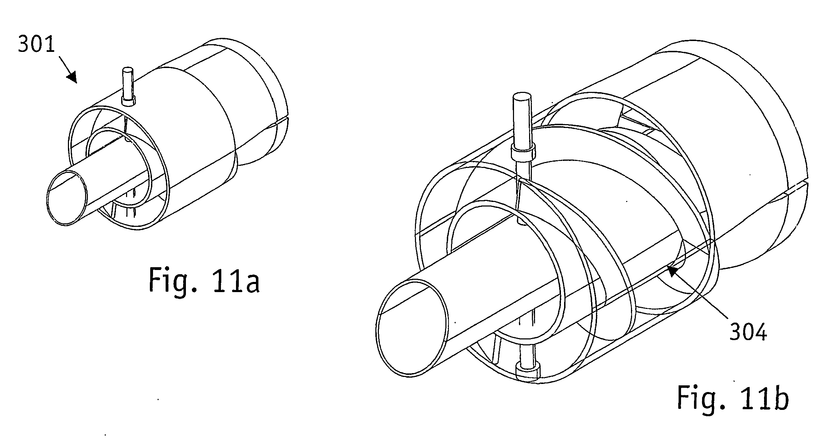

Figuren 10, 11a und 11b zeigen als viertes Ausführungsbeispiel eine Variante hierzu, gemäß der bei der Düse 301 nur ein Teil der den inneren Teil-Strömungskanal 305 durchströmenden Luftströmung in den verschwenkbaren Abschnitt 306 gelangt, was in Hinblick auf den Aufbau und die Abdichtung Vorteile bietet. Ferner ragt der Abschnitt 306 über den äußeren Teil-Strömungskanal 304 hinaus, welchem auch ein Teil der Luft, welche den inneren Teil-Strömungskanal 305 durchströmt hat, jedoch nicht in den Abschnitt 306 gelangt ist, zugeführt wurde. Insbesondere aus Fig. 11b wird der Verlauf des äußeren Teil-Strömungskanls 304 ersichtlich, welcher sich um den inneren Teil-Strömungskanal 305 schraubt.

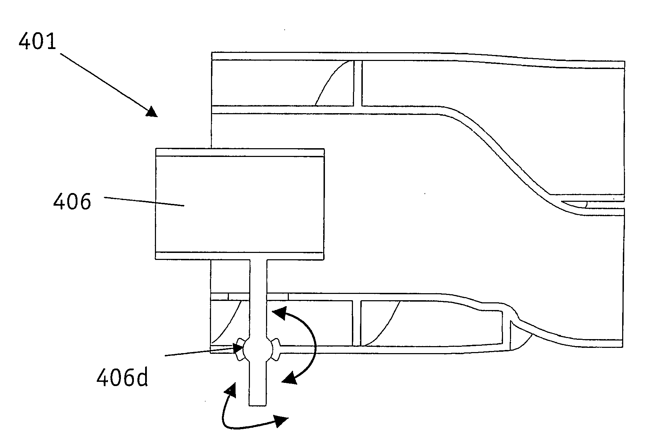

Fig. 12 zeigt eine Düse 401, welche im Wesentlichen der des vierten Ausführungsbeispiels entspricht, jedoch auf Grund eines Kugelgelenks 406d und einer entsprechenden Durchführung in der Wandung frei einstellbar ist, so dass lediglich mit einem verdrehbaren Abschnitt 406 eine Richtungseinstellung der Spot-Strömung nach oben, unten, rechts und links sowie in beliebige Zwischenrichtungen möglich ist. Es erfolgt wiederum keine Ablenkung der diffusen Strömung.

### Bezugszeichenliste

- 1, 101, 201, 301, 401: Düse
- 2: Strömungskanal
- 3: Einlassbereich
- 4, 204, 304: äußerer Teil-Strömungskanal
- 5, 205, 305: innerer Teil-Strömungskanal
- 6, 106, 206, 306, 406: erster Abschnitt
- 6a, 106a, 206a: Achse
- 6b, 106b: Antriebswelle
- 6c: Hebel
- 7, 107: zweiter Abschnitt
- 7a, 107a: Achse
- 7b, 107b: Antriebswelle
- 7c: Hebel
- 7d: Arm
- 7e: Querachse
- 107f: Gleitführung
- 107g: Koppelstange
- 107h: Zapfen
- 406d: Kugelgelenk

## Patentansprüche

1. Düse, insbesondere für ein Belüftungssystem eines Kraftfahrzeugs, mit mindestens einem Luft zuführenden Strömungskanal, wobei der Strömungskanal in der Düse in mindestens zwei Teil-Strömungskanäle (4, 5; 204; 205; 304, 305) aufgeteilt ist, wovon mindestens ein Teil-Strömungskanal (5; 205; 305) in seiner Ausström-Richtung einstellbar ist und mindestens ein Teil-Strömungskanal (4; 204; 304) starr ausgebildet ist, **dadurch gekennzeichnet, dass** der oder einer der einstellbaren Teil-Strömungskanäle (5; 205; 305) innerhalb eines anderen Teil-Strömungskanals (4; 204; 304) angeordnet ist.

2. Düse nach einem der vorhergehenden Ansprüche, **dadurch gekennzeichnet, dass** im einstellbaren Teil-Strömungskanal (5; 205; 305) eine gerichtete Strömung vorherrscht.

3. Düse nach einem der vorhergehenden Ansprüche, **dadurch gekennzeichnet, dass** im anderen, nicht einstellbaren Teil-Strömungskanal (4; 204; 304) eine drallbeaufschlagte Strömung vorherrscht.

4. Düse nach einem der vorhergehenden Ansprüche, **dadurch gekennzeichnet, dass** die Düse (1; 101; 201; 301; 401) verschwenkbare und oder verdrehbare Abschnitte (6, 7; 106, 107; 206; 306; 406) aufweist.

5. Düse nach Anspruch 4, **dadurch gekennzeichnet, dass** der oder die verschwenkbaren Abschnitte (6, 7; 106, 107; 206; 306; 406) den oder einen Teil des einstellbaren Teil-Strömungskanals (5; 205; 305) bilden.

6. Düse nach Anspruch 5, **dadurch gekennzeichnet, dass** die Schwenkachsen (6a, 7a; 106a; 107a) in einem rechten Winkel zueinander angeordnet sind.

7. Düse nach Anspruch 5 oder 6, **dadurch gekennzeichnet, dass** um eine Schwenkachse (6a; 106a) zwei Abschnitte (6, 7; 106; 107) verschwenkbar sind, und dass um die andere Schwenkachse (7a; 107a) ein Abschnitt (7; 107) verschwenkbar ist.

8. Düse nach einem der vorhergehenden Ansprüche, **dadurch gekennzeichnet, dass** die Düse (101) zweiteilig ausgebildet ist, wobei die beiden Düsenteile einander entsprechend ausgebildet sind und jeweils einen einstellbaren Teil-Strömungskanal (105) aufweisen.

9. Düse nach Anspruch 8, **dadurch gekennzeichnet, dass** die Teil-Strömungskanäle (105) parallel zueinander verschwenkbar sind.

10. Düse nach einem der vorhergehenden Ansprüche, **dadurch gekennzeichnet, dass** der einstellbare Teil-Strömungskanal (5; 205; 305) einen im Wesentlichen kreisförmigen Querschnitt aufweist.

11. Belüftungssystem, insbesondere für ein Kraftfahrzeug, **gekennzeichnet durch** mindestens eine Düse (1; 101; 201; 301; 401) gemäß einem der Ansprüche 1 bis 10.

## Claims

1. Nozzle, in particular for a motor vehicle ventilation system, with at least one air inlet flow duct, such that the flow duct in the nozzle is divided into at least two part-flow ducts (4; 5; 204; 205; 304; 305) of which at least one part-flow duct (5; 205; 305) is adjustable in its outflow direction and at least one part-flow duct (4; 204; 304) is fixed, **characterised in that** the or one of the adjustable part-flow duct(s) is arranged inside another part-flow duct (4; 204; 304).

2. Nozzle according to any of the preceding claims, **characterised in that** a directed flow prevails within the adjustable part-flow duct (5; 205; 305).

3. Nozzle according to any of the preceding claims, **characterised in that** a swirling flow prevails within the other, non-adjustable part-flow duct (5; 205; 305).

4. Nozzle according to any of the preceding claims, **characterised in that** the nozzle (1; 106, 107; 206; 306; 406) comprises sections (6, 7; 106, 107; 206, 207; 306; 406) that can be swivelled and/or rotated.

5. Nozzle according to Claim 4, **characterised in that** the swivelling section(s) (6, 7; 106, 107; 206, 207; 306; 406) form(s) the, or part of the adjustable part-flow duct (5; 205; 305).

6. according to Claim 5, **characterised in that** the swivel axes (6a, 7a; 106a; 107a) are arranged at a right-angle to one another.

7. Nozzle according to Claims 5 or 6, **characterised in that** two sections (6, 7; 106; 107) can be swivelled around one swivel axis (6a; 106a) and one section (7; 107) can be swivelled around the other swivel axis (7a; 107a).

8. Nozzle according to any of the preceding claims, **characterised in that** the nozzle (101) is constructed in two parts, such that the two parts of the nozzle are made to correspond with one another and each comprises an adjustable part-flow duct (105).

9. Nozzle according to Claim 8, **characterised in that** the part-flow ducts (105) can be swivelled parallel to one another.

10. Nozzle according to any of the preceding claims, **characterised in that** the adjustable part-flow duct (5; 205; 305) has an essentially circular cross-section.

11. Ventilation system, in particular for a motor vehicle, **characterised in that** it comprises at least one nozzle according to any of Claims 1 to 10.

## Revendications

1. Buse, en particulier pour un système de ventilation d'un véhicule automobile, comprenant au moins un canal d'écoulement amenant de l'air, le canal d'écoulement étant divisé dans la buse en au moins deux canaux d'écoulement partiels (4, 5 ; 204 ; 205 ; 304 ; 305), dont au moins un canal d'écoulement partiel (5 ; 205 ; 305) est réglable dans sa direction d'évacuation et au moins un canal d'écoulement partiel (4 ; 204 ; 304) est réalisé de façon rigide, **caractérisée en ce que** le ou l'un des canaux d'écoulement partiels (5 ; 205 ; 305) réglables est disposé à l'intérieur d'un autre canal d'écoulement partiel (4 ; 204 ; 304).

2. Buse selon l'une quelconque des revendications précédentes, **caractérisée en ce qu'**un écoulement dirigé prédomine dans le canal d'écoulement partiel (5 ; 205 ; 305) réglable.

3. Buse selon l'une quelconque des revendications précédentes, **caractérisée en ce qu'**un écoulement sollicité par la torsion prédomine dans l'autre canal d'écoulement partiel (4 ; 204 ; 304) non réglable.

4. Buse selon l'une quelconque des revendications précédentes, **caractérisée en ce que** la buse (1 ; 101 ; 201 ; 301 ; 401) présente des parties (6, 7 ; 106 ; 107 ; 206 ; 306 ; 406) basculantes et/ou rotatives.

5. Buse selon la revendication 4, **caractérisée en ce que** la ou les parties (6, 7 ; 106 ; 107 ; 206 ; 306 ; 406) basculantes forment la ou une partie du canal d'écoulement partiel (5 ; 205 ; 305) réglable.

6. Buse selon la revendication 5, **caractérisée en ce que** les axes de pivotement (6a, 7a ; 106a ; 107a) sont disposés les uns par rapport aux autres en formant un angle droit.

7. Buse selon la revendication 5 ou 6, **caractérisée en ce que** deux parties (6, 7 ; 106 ; 107) peuvent basculer autour d'un axe de pivotement (6a ; 106a) et **en ce qu'**une partie (7 ; 107) peut basculer autour de l'autre axe de pivotement (7a ; 107a).

8. Buse selon l'une quelconque des revendications précédentes, **caractérisée en ce que** la buse (101) est réalisée en deux parties, les deux parties de buse étant réalisées de façon appropriée entre elles et présentant chacune un canal d'écoulement partiel (105) réglable.

9. Buse selon la revendication 8, **caractérisée en ce que** les canaux d'écoulement partiels (105) peuvent basculer parallèlement les uns par rapport aux autres.

10. Buse selon l'une quelconque des revendications précédentes, **caractérisée en ce que** le canal d'écoulement partiel (5 ; 205 ; 305) réglable présente une section sensiblement circulaire.

11. Système d'aération de ventilation, en particulier pour un véhicule automobile, **caractérisé par** au moins une buse (1 ; 101 ; 201 ; 301 ; 401) selon l'une quelconque des revendications 1 à 10.
